# EUROPÄISCHE PATENTANMELDUNG

(11) **EP 2 336 503 A2**
(43) Veröffentlichungstag der Anmeldung: **22.06.2011**
(21) Anmeldenummer: 10193852.0
(22) Anmeldetag: 06.12.2010
(51) Int. Cl.: F01D 25/00, F01D 25/18, F02C 7/06, F01M 1/10

(54) **Anordnung zum Abblasen von aus dem Schmierölentlüftungssystem eines Gasturbinentriebwerks abegetrennter Entlüftungsluft**

(30) Priorität: 21.12.2009 DE 102009060051
(71) Anmelder: Rolls-Royce Deutschland Ltd & Co KG, 15827 Blankenfelde-Mahlow (DE)
(72) Erfinder: Thies, Robert, 14548 Schwielowsee (DE)

(57) **Zusammenfassung**

Bei einer Anordnung zum Abblasen von aus dem Schmierölentlüftungssystem eines Gasturbinentriebwerks abgetrennter und über eine Entlüftungsleitung nach außen abgeführter, durch Öl verunreinigter Abluft mündet die Entlüftungsleitung (13) in eine im Innern eines Abgaskonus (9) des Gasturbinentriebwerks gebildete Beruhigungskammer (12), an die über ein Abnahmerohr (17) eine im Abgasstrom des Gasturbinentriebwerks positionierte, in Abgasströmungsrichtung ausgerichtete Venturidüse (14) zum Absaugen der Abluft und zum Einblasen in den Abgasstrom angeschlossen ist. Die Abluft wird - ohne Kontakt mit sichtbaren Triebwerksteilen - vollständig mit dem Abgasstrom ausgetragen.(Fig. 2)

## Beschreibung

Die Erfindung betrifft eine Anordnung zum Abblasen von aus dem Schmierölentlüftungssystem eines Gasturbinentriebwerks abgetrennter, und über eine Entlüftungsleitung nach außen abgeführter, durch Öl verunreinigter Abluft.

In den Lagergehäusen von Gasturbinentriebwerken vermischt sich das Schmieröl mit Sperrluft, die aus dem in den Öltank zurückgeführten Schmieröl bekanntermaßen mit Hilfe eines Entlüftungssystems abgetrennt und über eine Entlüftungsleitung und einen an der Außenseite der Triebwerksverkleidung (Gondel) oder der Verkleidung (Pylon) der Triebwerksaufhängung mündenden Entlüftungsauslass ins Freie gelangt. Die ausgeblasene Luft enthält jedoch immer noch Ölbestandteile, die zu einer erheblichen, durch das Anhaften von Schmutz- und Staubpartikeln noch verstärkten Verschmutzung der Verkleidung des Triebwerks bzw. der Triebwerksaufhängung am Flugzeugrumpf führen. Diese Verschmutzung ist aus ästhetischen Gründen unerwünscht und kann aufgrund des durch eine hohe Triebwerkstemperatur bedingten Einbrennens in die Verkleidung nur mit aufwändigen Reinigungsmaßnahmen wieder entfernt werden. Die bisher bekannten Vorschläge zur Lösung dieses Problems sind darauf gerichtet, die mit Öl verschmutzte Luft (Ölluft) möglichst an einer von der Außenfläche der Verkleidung entfernten Position auszublasen, um den Oberflächenkontakt mit der Verkleidung zu vermeiden. Die Ausbildung derartiger Luftauslässe, die aufgrund des während des Fluges auftretenden hohen Luftwiderstands noch aerodynamisch verkleidet werden müssen und die Anordnung einer bis an die Außenseite der Verkleidung des Triebwerks bzw. der Triebwerksaufhängung geführten, langen Entlüftungsleitung erforderlich machen, ist mit einem erheblichen Aufwand und zusätzlichem Gewicht verbunden.

Der Erfindung liegt die Aufgabe zugrunde, eine Anordnung zum Abblasen der aus dem Schmierölentlüftungssystem eines Gasturbinentriebwerks austretenden Luft anzugeben, die eine Ölverschmutzung der Verkleidung des Triebwerks oder der Triebwerksaufhängung vermeidet und darüber hinaus mit einer Gewichtsreduzierung verbunden ist.

Erfindungsgemäß wird die Aufgabe mit einer gemäß den Merkmalen des Patentanspruchs 1 ausgebildeten Anordnung zum Abblasen der aus dem Schmierölentlüftungssystem abgeführten Luft gelöst. Vorteilhafte Weiterbildungen der Erfindung sind Gegenstand der Unteransprüche.

Der Kern der Erfindung besteht mit anderen Worten darin, dass die über eine Entlüftungsleitung abgeführte, durch Ölbestandteile verunreinigte Abluft aus dem Schmierölentlüftungssystem über eine in der Länge deutlich verringerte Entlüftungsleitung unmittelbar, in eine im Wesentlichen von dem Abgaskonus des Gasturbinentriebwerks gebildete Beruhigungskammer mündet und die in der Beruhigungskammer befindliche Abluft über ein Abnahmerohr an eine im Abgasstrom des Gasturbinentriebwerks positionierte, in Strömungsrichtung ausgerichtete Venturidüse angeschossen ist. Aufgrund der geringen statisches Drucks an der engsten Stelle des Düsenkörpers und damit des Abnahmerohrs sowie der Druckdifferenz gegenüber der unter hohem Druck stehenden Abluft in der Beruhigungskammer wird die Abluft aus der Beruhigungskammer abgesaugt und von dem Gasstrom im Düsenkörper mitgerissen und in den Abgasstrom eingeblasen und in diesem verteilt. Somit können sich keine Ölpartikel an irgendwelchen Triebwerksteilen - und schon gar nicht an sichtbaren Flächen - absetzen. Aufgrund der verringerten Länge der Entlüftungsleitung ist zudem eine Gewichtsreduzierung möglich.

In Ausgestaltung der Erfindung ist die Beruhigungskammer durch den Abgaskonus sowie ein Abgasleitschaufelgehäuse des Triebwerks und eine Rückwand begrenzt. Die Entlüftungsleitung mündet unmittelbar über eine in der Rückwand befindliche Öffnung in der Beruhigungskammer.

Der Düsenkörper der Venturidüse ist im Abstand von den Innenflächen des Abgasstromkanals positioniert. Die Position des Düsenkörpers ist über die jeweilige Länge des Abnahmerohrs einstellbar.

Vorzugsweise ist der Düsenkörper mittig im Abgasstrom positioniert, so dass die ölbelastete Abluft vollständig in dem Abgasstrom aufgenommen und mit diesem abgeführt wird.

In weiterer Ausgestaltung der Erfindung ist ein in die Beruhigungskammer mündender Abschnitt des Abnahmerohrs zur Rohröffnung hin konisch erweitert, um eine gute Absaugwirkung zu gewährleisten.

Ein Ausführungsbeispiel der Erfindung wird anhand der Zeichnung, in der
- Fig. 1: eine schematische Schnittansicht eines mit einer Triebwerksverkleidung und einem kammerartig ausgebildeten Abgaskonus versehenen TurbofanGasturbinentriebwerks;
- Fig. 2: eine Teilansicht des hinteren Triebwerksbereichs mit einer an den Abgaskonus angeschlossenen und in den Abgasstrom des Triebwerks eingebundenen Venturidüse; und

- Fig. 3: eine detaillierte Ansicht AA der Venturidüse gemäß Fig. 2
zeigt, näher erläutert.

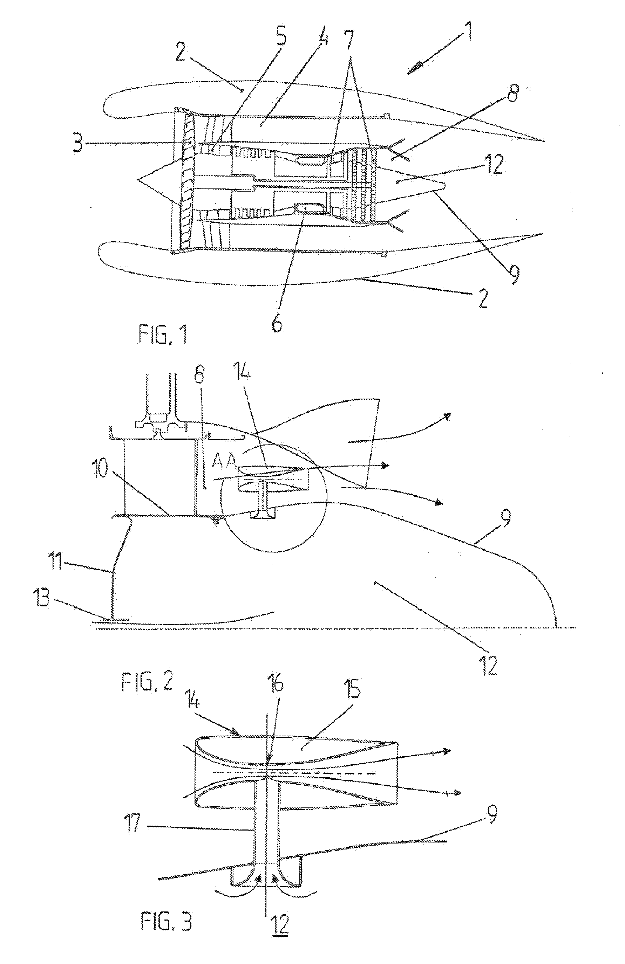

Das in Fig. 1 dargestellte Turbofantriebwerk 1 ist von einer Triebwerksverkleidung 2 umgeben, an deren Außenfläche bei den bekannten Triebwerken üblicherweise eine von dem Schmierölentlüftungssystem kommende Entlüftungsleitung mündet, um die Ölluft ins Freie abzuführen. Das Triebwerk 1 umfasst einen stromab des Fans 3 vorgesehenen Nebenstromkanal 4 und einen Kernstromkanal 5, der stromab der Brennkammern 6 und der Turbinen 7 in einen Abgasstromkanal 8 übergeht. Der Abgasstromkanal 8 ist nach innen durch die Außenwandfläche des Abgaskonus 9 begrenzt. Der Abgaskonus 9 bildet - wie Fig. 2 zeigt - zusammen mit dem Abgasleitschaufelgehäuse 10 und einer Rückwand 11 eine geschlossene Beruhigungskammer 12, in die eine - gegenüber dem oben erwähnten Stand der Technik deutlich verkürzte - mit dem Schmierölentlüftungssystem verbundene Entlüftungsleitung 13 mündet. In dem Abgaskanal 8 ist - und zwar im Abstand von den den Abgaskanal begrenzenden Wandflächen - eine Venturidüse 14 angeordnet, deren Düsenkörper 15 in Richtung des Abgasstroms ausgerichtet ist und deren mit der engsten Stelle 16 des Düsenkörpers 15 verbundenes Abnahmerohr 17 an die Beruhigungskammer 11 angeschlossen ist. Die von den benachbarten Wandflächen beabstandete Positionierung des Düsenkörpers 15 wird durch eine bestimmte Länge des Abnahmerohres 17 realisiert.

Während des Betriebs des Turbofantriebwerks 1 wird ein Teil des Abgasstroms durch die Venturidüse 14 geleitet. Der statische Druck an der engsten Stelle 16 des Düsenkörpers 15 befindet sich gemäß dem Venturidüsenprinzip auf einem Minimalwert und gleichzeitig sinkt der Druck in dem an der engsten Stelle 16 des Düsenkörpers 15 ansetzenden Abnahmerohr 17, während sich der Druck der in der Beruhigungskammer 12 vorhandenen Ölluft auf einem signifikant höheren Druckniveau befindet. Die Ölluft wird somit aufgrund der Druckdifferenz aus der Beruhigungskammer 12 abgesaugt und zunächst mit dem Abgasstrom im Düsenkörper 15 und letztlich mit dem gesamten Abgasstrom vermischt und so ohne Kontakt mit jeglichen Triebwerksteilen ins Freie ausgetragen.

### Bezugszeichenliste

- 1: Turbofantriebwerk
- 2: Triebwerksverkleidung
- 3: Fan
- 4: Nebenstromkanal
- 5: Kernstromkanal
- 6: Brennkammer
- 7: Turbinen
- 8: Abgasstromkanal
- 9: Abgaskonus
- 10: Abgasleitschaufelgehäuse
- 11: Rückwand
- 12: Beruhigungskammer
- 13: Entlüftungsleitung
- 14: Venturidüse
- 15: Düsenkörper
- 16: engste Stelle von 15
- 17: Abnahmerohr

## Patentansprüche

1. Anordnung zum Abblasen von aus dem Schmierölentlüftungssystem eines Gasturbinentriebwerks abgetrennter und über eine Entlüftungsleitung nach außen abgeführter, durch Öl verunreinigter Abluft, **dadurch gekennzeichnet, dass** die Entlüftungsleitung (13) in eine im Innern eines Abgaskonus (9) des Gasturbinentriebwerks gebildete Beruhigungskammer (12) mündet, an die über ein Abnahmerohr (17) eine im Abgasstrom des Gasturbinentriebwerks positionierte, in Strömungsrichtung ausgerichtete Venturidüse (14) zum Absaugen der Abluft und zum Einblasen in den Abgasstrom angeschlossen ist.

2. Anordnung nach Anspruch 1, **dadurch gekennzeichnet, dass** die Beruhigungskammer (12) durch den Abgaskonus (9) sowie ein Abgasleitschaufelgehäuse (10) und eine Rückwand (11) begrenzt ist, wobei die Entlüftungsleitung (13) an eine in der Rückwand (11) vorhandene Öffnung angeschlossen ist.

3. Anordnung nach Anspruch 1, **dadurch gekennzeichnet, dass** der Düsenkörpers (15) der Venturidüse (14) im Abstand von den Innenflächen des Abgasstromkanals (8) positioniert ist und die Position des Düsenkörpers (15) über die jeweilige Länge des Abnahmerohrs (17) einstellbar ist.

4. Anordnung nach Anspruch 3, **dadurch gekennzeichnet, dass** der Düsenkörper (15) im Wesentlichen mittig im Abgasstrom positioniert ist.

5. Anordnung nach Anspruch 1, **dadurch gekennzeichnet, dass** ein in die Beruhigungskammer (12) mündender Abschnitt des Abnahmerohrs (17) zur Rohröffnung hin konisch erweitert ist.
